(19) Europäisches Patentamt
European Patent Office
Office européen des brevets

(11) **EP 4 675 208 A1**

(12) **EUROPEAN PATENT APPLICATION**
published in accordance with Art. 153(4) EPC

(43) Date of publication:
**07.01.2026 Bulletin 2026/02**

(21) Application number: **23927175.2**

(22) Date of filing: **01.12.2023**

(51) International Patent Classification (IPC):
*F25B 49/02* (2006.01)   *F25B 41/20* (2021.01)

(52) Cooperative Patent Classification (CPC):
Y02B 30/70

(86) International application number:
**PCT/CN2023/135901**

(87) International publication number:
**WO 2024/187834 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.03.2023 CN 202310239288**

(71) Applicants:
• **Chongqing Midea General Refrigeration
Equipment Co., Ltd.
Chongqing 401336 (CN)**

• **Midea Group Co., Ltd.
Foshan, Guangdong 528311 (CN)**

(72) Inventor: **YANG, Zhihua
Chongqing 401336 (CN)**

(74) Representative: **RGTH
Patentanwälte PartGmbB
Neuer Wall 10
20354 Hamburg (DE)**

(54) **TWO-STAGE COMPRESSION CENTRIFUGAL UNIT AND MIDDLE AIR SUPPLEMENTING CONTROL METHOD THEREFOR, AND HEATING AND VENTILATION DEVICE**

(57) A two-stage compression centrifugal unit. The two-stage compression centrifugal unit comprises: a two-stage centrifugal compressor; an evaporator and a condenser, a first-stage air suction port of the two-stage centrifugal compressor being connected to an air outlet of the evaporator, and a second-stage discharge port of the two-stage centrifugal compressor being connected to an air inlet of the condenser; an economizer and an air supplement valve, the economizer being connected between an air inlet of the evaporator and an air outlet of the condenser, and the economizer being connected to a first-stage discharge port and a second-stage air suction port of the two-stage centrifugal compressor by means of the air supplement valve; and a calculation module, the calculation module calculating, according to operation parameters of the two-stage compression centrifugal unit, an actual air supplement amount and an optimal air supplement amount so as to adjust an opening degree of the air supplement valve. The actual air supplement amount of the adjusted air supplement valve is within the optimal air supplement amount interval.

Fig.1

## Description

CROSS-REFERENCE TO RELATED APPLICATIONS

The present application claims priority and benefits from the following patent application, the entire disclosure of which is incorporated herein by reference:

Chinese patent application No. 202310239288.7, entitled "Two-stage Compression Centrifugal Unit, and Middle Air Supplementing Control Method Therefor" filed with China National Intellectual Property Administration on March, 13, 2023.

TECHNICAL FIELD

The present disclosure belongs to the field of cooling technology, and specifically relates to a two-stage compression centrifugal unit, an intermediate gaseous refrigerant supplementing control method for a two-stage compression centrifugal unit, and a heating, ventilation and air conditioning (HVAC) apparatus.

BACKGROUND

A two-stage compression centrifugal unit adopts an economizer with an inter-stage configuration to improve its energy efficiency by intermediate gaseous refrigerant supplementing and enthalpy increasing. However, the control solutions for intermediate gaseous refrigerant supplementing currently have the following problems.

If the gaseous refrigerant supplement amount is not controlled, the energy efficiency will be poor, and there will be a risk of carrying liquid during gaseous refrigerant supplementing. There is no valve added to a gaseous refrigerant supplementing pipeline, so the gaseous refrigerant supplement amount is not adjusted. The size of the gaseous refrigerant supplementing pipeline of the economizer is determined based on the gaseous refrigerant supplement amount at full load under a single nominal designed operating condition. When the unit operates under partial load or variable operating conditions, such as dual operating conditions of ice reserving and air conditioning, and dual operating conditions of air conditioning and heat recovering, there may be situations where the gaseous refrigerant supplement amount is too large or too small, resulting in the failure to achieve the effect of gaseous refrigerant supplementing and enthalpy increasing, and seriously affecting the reliable operation of the unit.

In order to solve the above problem, a gaseous refrigerant supplementing valve is added to control the gaseous refrigerant supplement amount. However, if rough control is implemented to simply prevent the risk of carrying liquid during gaseous refrigerant supplementing, without precise adjustment of the gaseous refrigerant supplement amount, the gaseous refrigerant supplement amount will not be in the optimal range of gaseous refrigerant supplement amount. At the same time, the control of gaseous refrigerant supplementing cannot be adjusted adaptively and dynamically with changes of load and operating conditions such as pressure ratio, water outflow temperature, subcooling degree, etc., resulting in the inability to maximize the effect of gaseous refrigerant supplementing and enthalpy increasing and achieve efficient and stable operation of the unit under all operating conditions.

## SUMMARY

The present disclosure aims to at least partially solve the technical problem that the gaseous refrigerant supplement amount of existing two-stage compression centrifugal units is not in the optimal range of gaseous refrigerant supplement amount.

In order to achieve the above object, a first aspect of the present disclosure provides a two-stage compression centrifugal unit, which comprises: a two-stage centrifugal compressor; an evaporator and a condenser, where a first-stage suction port of the two-stage centrifugal compressor is connected to an outlet of the evaporator, and a second-stage discharge port of the two-stage centrifugal compressor is connected to an inlet of the condenser; an economizer and a gaseous refrigerant supplementing valve, where the economizer is connected between an inlet of the evaporator and an outlet of the condenser, and the economizer is connected to a first-stage discharge port and a second-stage suction port of the two-stage centrifugal compressor respectively through the gaseous refrigerant supplementing valve; and a calculation module, which calculates an actual gaseous refrigerant supplement amount and an optimal gaseous refrigerant supplement amount based on operating parameters of the two-stage compression centrifugal unit, so that an opening degree of the gaseous refrigerant supplementing valve can be adjusted.

The two-stage compression centrifugal unit provided in the present disclosure comprises the calculation module, which obtains the operating parameters of the two-stage compression centrifugal unit, and calculates the optimal gaseous refrigerant supplement amount and the actual gaseous refrigerant supplement amount based on the operating parameters of the two-stage compression centrifugal unit to adjust the opening degree of the gaseous refrigerant supplementing valve, so that the actual gaseous refrigerant supplement amount of the adjusted gaseous refrigerant supplementing valve is within the optimal range of gaseous refrigerant supplement amount.

**In** addition, the two-stage compression centrifugal unit according to the present disclosure may also have the following additional technical features.

In some embodiments of the present disclosure, the calculation module calculates the actual gaseous refrigerant supplement amount $\delta m$ based on the following formulas:

$$\delta m = \frac{m_1\left(h_{0[5]}-h_{0[7]}\right)}{\left(h_{0[3]}-h_{0[5]}\right)}, \ m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3']}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3']}$: enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

In some embodiments of the present disclosure, the calculation module calculates the optimal gaseous refrigerant supplement amount $T\delta m$ based on the following formulas:

$$T\delta m = \frac{m_1\left(h_{0[5]}-h_{0[7]}\right)}{\left(h_{0[3]}-h_{0[5]}\right)}, \ m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3'']}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3'']}$: optimal enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

In some embodiments of the present disclosure, the operating parameters comprise temperature parameters and pressure parameters, and the calculation module is capable of obtaining $h_{0[1]}$, $h_{0[3]}$, $h_{0[3']}$, $h_{0[3'']}$, $h_{0[4]}$, $h_{0[5]}$ and $h_{0[7]}$ based on the temperature parameters and pressure parameters by referring to a temperature, pressure and enthalpy value comparison table and/or a pressure and saturation enthalpy value comparison table.

In some embodiments of the present disclosure, a control module is further comprised, which adjusts the opening degree of the gaseous refrigerant supplementing valve by taking the optimal gaseous refrigerant supplement amount as a control objective and the actual gaseous refrigerant supplement amount as a feedback value.

A second aspect of the present disclosure provides an intermediate gaseous refrigerant supplementing control method for a two-stage compression centrifugal unit, which is implemented by the two-stage compression centrifugal unit according to the first aspect of the present disclosure, and which comprises the following steps:

receiving the operating parameters of the two-stage compression centrifugal unit; and

calculating the optimal gaseous refrigerant supplement amount and the actual gaseous refrigerant supplement amount based on the operating parameters of the two-stage compression centrifugal unit to adjust the opening degree of the gaseous refrigerant supplementing valve.

In the intermediate gaseous refrigerant supplementing control method for a two-stage compression centrifugal unit provided in the present disclosure, the optimal gaseous refrigerant supplement amount and the actual gaseous refrigerant supplement amount are calculated based on the operating parameters of the two-stage compression centrifugal unit, and the opening degree of the gaseous refrigerant supplementing valve is adjusted based on the optimal gaseous refrigerant supplement amount and the actual gaseous refrigerant supplement amount so that the actual gaseous refrigerant supplement amount of the gaseous refrigerant supplementing valve can be within the optimal range of gaseous refrigerant supplement amount.

In some embodiments of the present disclosure, the actual gaseous refrigerant supplement amount $\delta m$ is calculated based on the following formulas:

$$\delta m = \frac{m_1\left(h_{0[5]}-h_{0[7]}\right)}{\left(h_{0[3]}-h_{0[5]}\right)}, \quad m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3\prime]}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3\prime]}$: enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

In some embodiments of the present disclosure, the optimal gaseous refrigerant supplement amount $T\delta m$ is calculated based on the following formulas:

$$T\delta m = \frac{m_1\left(h_{0[5]}-h_{0[7]}\right)}{\left(h_{0[3]}-h_{0[5]}\right)}, \quad m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3\prime\prime]}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3\prime\prime]}$: optimal enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

In some embodiments of the present disclosure, the method further comprises a step of "adjusting the opening degree of the gaseous refrigerant supplementing valve to a first opening degree by taking the optimal gaseous refrigerant supplement amount as a control objective and the actual gaseous refrigerant supplement amount as a feedback value".

In some embodiments of the present disclosure, the method further comprises the following steps:

obtaining a second-stage suction superheat degree at the second-stage suction port;
judging whether the second-stage suction superheat degree is within a preset range;
maintaining the gaseous refrigerant supplementing valve at the first opening degree if the second-stage suction superheat degree is within the preset range;
performing opening degree reduction control on the first opening degree if the second-stage suction superheat degree is smaller than a preset lower limit of suction superheat degree; and
performing energy adjustment control on the first opening degree if the second-stage suction superheat degree is larger than a preset upper limit of suction superheat degree.

In some embodiments of the present disclosure, the method further comprises the following steps:

obtaining a second-stage discharge superheat degree at the second-stage discharge port;

judging whether the second-stage discharge superheat degree is within a preset range;

maintaining the gaseous refrigerant supplementing valve at the first opening degree if the second-stage discharge superheat degree is within the preset range;

performing opening degree reduction control on the first opening degree if the second-stage discharge superheat degree is smaller than a preset lower limit of discharge superheat degree; and

performing energy adjustment control on the first opening degree if the second-stage discharge superheat degree is larger than a preset upper limit of discharge superheat degree.

A third aspect of the present disclosure provides an HVAC apparatus, which comprises the two-stage compression centrifugal unit as described in any one of the technical solutions in the first aspect.

BRIEF DESCRIPTION OF THE DRAWINGS

Upon reading detailed description of the preferred embodiments below, various other advantages and benefits will become clear to those skilled in the art. The accompanying drawings are only used for the purpose of illustrating the preferred embodiments, and should not be considered as a limitation to the present disclosure. Moreover, throughout the drawings, the same reference signs are used to denote the same components. In the drawings:

FIG. 1 shows a schematic structural diagram of the two-stage compression centrifugal unit according to some embodiments of the present disclosure.

FIG. 2 shows a pressure and enthalpy value chart of the two-stage compression centrifugal unit according to some embodiments of the present disclosure.

FIG. 3 shows a flowchart of the intermediate gaseous refrigerant supplementing control method for a two-stage compression centrifugal unit according to some embodiments of the present disclosure.

FIG. 4 shows a flowchart of the intermediate gaseous refrigerant supplementing control method for a two-stage compression centrifugal unit according to some embodiments of the present disclosure.

FIG. 5 shows a flowchart of the intermediate gaseous refrigerant supplementing control method for a two-stage compression centrifugal unit according to some embodiments of the present disclosure.

FIG. 6 shows a flowchart of the intermediate gaseous refrigerant supplementing control method for a two-stage compression centrifugal unit according to some embodiments of the present disclosure.

List of reference signs:

100: two-stage compression centrifugal unit;

1: intake pipeline; 11: first pressure sensor; 12: first temperature sensor;

2: two-stage centrifugal compressor;

3: connecting pipeline; 31: second pressure sensor; 32: second temperature sensor;

4: discharge pipeline; 41: third pressure sensor; 42: third temperature sensor;

5: condenser;

6: gaseous refrigerant supplementing valve; 61: fourth pressure sensor; 62: fourth temperature sensor;

7: economizer;

8: evaporator;

9: fifth pressure sensor;

10: first-stage throttle valve;

13: sixth pressure sensor;

14: second-stage throttle valve.

DETAILED DESCRIPTION

Hereinafter, exemplary embodiments of the present disclosure will be described in greater detail with reference to the accompanying drawings. Although the exemplary embodiments of the present disclosure are shown in the drawings, it should be understood that the present disclosure may be implemented in various forms and should not be limited by the embodiments set forth herein. On the contrary, these embodiments are provided to enable a more thorough understanding of the present disclosure and to fully convey the scope of the present disclosure to those skilled in the art.

It should be understood that the terms used herein are only for the purpose of describing specific exemplary embodiments, and are not intended to be limitative. Unless clearly indicated otherwise in the context, singular forms "a", "an", and "said" as used herein may also mean that plural forms are comprised. Terms "include", "comprise", "contain" and "have" are inclusive, and therefore indicate the existence of the stated features, steps, operations, elements and/or components, but do not exclude the existence or addition of one or more other features, steps, operations, elements, components, and/or combinations thereof. The method steps, processes, and operations described herein should not be interpreted as requiring them to be executed in the specific order described or illustrated, unless the order of execution is clearly indicated. It should also be understood that additional or alternative steps may be used.

Although terms "first", "second", "third" and the like may be used herein to describe multiple elements, components, regions, layers and/or sections, these elements, components, regions, layers and/or sections should not be limited by these terms. These terms may be only used to distinguish one element, component, region, layer or section from another region, layer or section. Unless clearly indicated in the context, terms such as "first", "second" and other numerical terms do not imply an order or sequence when they are used herein. Therefore, the first element, component, region, layer or section discussed below may be referred to as a second element, component, region, layer or section without departing from the teachings of the exemplary embodiments.

For ease of description, spatial relative terms may be used herein to describe the relationship of one element or feature relative to another element or feature as shown in the drawings. These relative terms are, for example, "inner", "outer", "inside", "outside", "below", "under", "above", "over", etc. These spatial relative terms are intended to comprise different orientations of the device in use or in operation in addition to the orientation depicted in the drawings. For example, if the device in the figure is turned over, then elements described as "below other elements or features" or "under other elements or features" will be oriented "above the other elements or features" or "over the other elements or features". Thus, the exemplary term "below" may comprise orientations of both above and below. The device can be otherwise oriented (rotated by 90 degrees or in other directions), and the spatial relationship descriptors used herein will be explained accordingly.

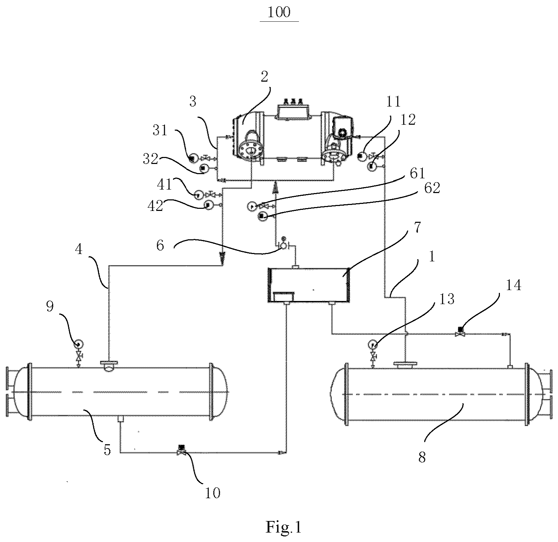

FIG. 1 shows a schematic structural diagram of the two-stage compression centrifugal unit according to some embodiments of the present disclosure. Referring to FIG. 1, some embodiments of the first aspect of the present disclosure provide a two-stage compression centrifugal unit 100, which comprises a two-stage centrifugal compressor 2, an evaporator 8, a condenser 5, an economizer 7, a gaseous refrigerant supplementing valve 6, and a calculation module (not shown in the figure).

A first-stage suction port of the two-stage centrifugal compressor 2 is connected to an outlet of the evaporator 8, and a second-stage discharge port of the two-stage centrifugal compressor 2 is connected to an inlet of the condenser 5. The economizer 7 is arranged between an inlet of the evaporator 8 and an outlet of the condenser 5, and is also connected to a first-stage discharge port and a second-stage suction port of the two-stage centrifugal compressor 2 respectively through the gaseous refrigerant supplementing valve 6. The calculation module receives operating parameters of the two-stage compression centrifugal unit 100 and calculates an optimal gaseous refrigerant supplement amount and an actual gaseous refrigerant supplement amount based on the operating parameters of the two-stage compression centrifugal unit 100 to adjust the opening degree of the gaseous refrigerant supplementing valve 6.

The two-stage compression centrifugal unit 100 provided in the present disclosure comprises the calculation module, which receives the operating parameters of the two-stage compression centrifugal unit 100, and calculates the optimal gaseous refrigerant supplement amount and the actual gaseous refrigerant supplement amount based on the operating parameters of the two-stage compression centrifugal unit 100 to adjust the opening degree of the gaseous refrigerant supplementing valve 6, so that the actual gaseous refrigerant supplement amount of the adjusted refrigerant supplementing valve 6 is within the optimal range of gaseous refrigerant supplement amount.

The two-stage centrifugal compressor 2 comprises a first-stage compressor and a second-stage compressor. The first-stage compressor comprises a first-stage suction port and a first-stage discharge port, and the second-stage compressor comprises a second-stage suction port and a second-stage discharge port. The arrows in FIG. 1 indicate a flow direction of refrigerant. The first-stage suction port of the two-stage centrifugal compressor 2 is connected to the evaporator 8 through an intake pipeline 1. A first pressure sensor 11 and a first temperature sensor 12 are arranged on the intake pipeline 1 to measure a first-stage suction pressure P1 (the pressure of refrigerant at the first-stage suction port) and a first-stage suction temperature T1 (the temperature of refrigerant at the first-stage suction port). The first-stage discharge port and the second-stage suction port are connected through a connecting pipeline 3. The refrigerant output from the first-stage discharge port is delivered to the second-stage suction port through the connecting pipeline 3. A second pressure sensor 31 and a second temperature sensor 32 are arranged on the connecting pipeline 3. The second pressure sensor 31 is used to measure a second-stage suction pressure P3' (the pressure of refrigerant at the second-stage suction port), and the second temperature sensor 32 is used to measure a second-stage suction temperature T3' (the temperature of refrigerant at the second-stage suction port). The second-stage discharge port of the two-stage centrifugal compressor 2 is connected to the condenser 5 through a discharge pipeline 4. A third pressure sensor 41 and a third temperature sensor 42 are arranged on the discharge pipeline 4 to measure a second-stage exhaust pressure P4 (the pressure of refrigerant at the second-stage discharge port) and a second-stage exhaust temperature T4 (the temperature of refrigerant at the second-stage discharge port). The two-stage centrifugal compressor 2 receives low-temperature and low-pressure refrigerant from the evaporator 8 through the intake pipeline 1, compresses it in two stages to obtain high-temperature and high-pressure refrigerant, and delivers the high-temperature and high-pressure refrigerant to the condenser 5 through the discharge pipeline 4.

The economizer 7 is connected to the connecting pipeline 3 through a gaseous refrigerant supplementing pipeline, and the gaseous refrigerant supplementing valve 6 is arranged on the gaseous refrigerant supplementing pipeline. The function of the economizer 7 is to provide intermediate gaseous refrigerant supplementing for the two-stage centrifugal compressor 2. That is, the economizer 7 delivers additional refrigerant to the connecting pipeline 3 through the gaseous refrigerant supplementing pipeline. The additional refrigerant, together with the original refrigerant output from the first-stage discharge port in the connecting pipeline 3, is delivered to the second-stage suction port of the second-stage compressor, and the refrigerant supplementing flow rate of the economizer 7 is adjusted through the gaseous refrigerant supplementing valve 6. A fourth pressure sensor 61 and a fourth temperature sensor 62 are both arranged on the gaseous refrigerant supplementing pipeline, and specifically, the fourth pressure sensor 61 and the fourth temperature sensor 62 are both arranged on a section of the gaseous refrigerant supplementing pipeline that is located between the gaseous refrigerant supplementing valve 6 and the connecting pipeline 3. Therefore, the pressure and temperature of the refrigerant output from the gaseous refrigerant supplementing valve 6 are measured by the fourth pressure sensor 61 and the fourth temperature sensor 62. The fourth pressure sensor 61 is used to measure the pressure of the refrigerant output from the gaseous refrigerant supplementing valve 6, which is defined as gaseous refrigerant supplementing pressure P6. The fourth temperature sensor is used to measure the temperature of the refrigerant output from the gaseous refrigerant supplementing valve 6, which is defined as the gaseous refrigerant supplementing temperature T6. A fifth pressure sensor 9 is used to measure the pressure of the refrigerant in the condenser 5, which is defined as condenser pressure P5. A sixth pressure sensor 13 is used to measure the pressure of the refrigerant in the evaporator 8, which is defined as evaporator pressure P8.

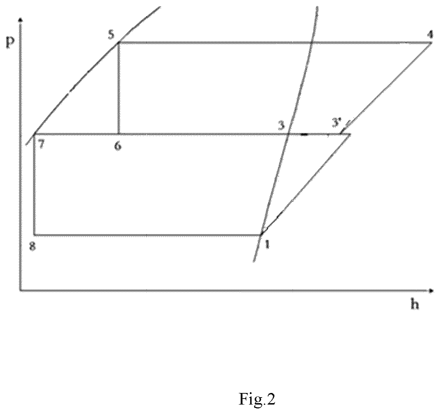

Referring to FIG. 2, the line from 4 to 5 indicates that the refrigerant flows through the condenser 5, the high-temperature and high-pressure refrigerant gas exchanges heat with the cooling water inside the condenser 5 so that the heat is transferred to the cooling water and taken away, and the refrigerant gas condenses into a high-pressure liquid; during this process, the pressure of the refrigerant remains unchanged, but the enthalpy value decreases, that is, the temperature decreases. The line from 5 to 6 indicates that the refrigerant flows through a first-stage throttle valve 10; during this process, the flow rate of the refrigerant is restricted, so the temperature remains unchanged and the pressure decreases. The line from 7 to 8 indicates that the refrigerant flows through a second-stage throttle valve 14; during this process, the flow rate of the refrigerant is restricted, so the temperature remains unchanged and the pressure decreases. The line from 8 to 1 indicates that the refrigerant flows through the evaporator 8; during this process, the pressure of the refrigerant remains unchanged, and the enthalpy value increases, i.e., the temperature rises, indicating evaporation of the refrigerant. The line from 1 to 3 indicates the operation process of the first-stage compressor; during this process, the pressure of the refrigerant increases and the temperature rises. The line from 3 to 3' indicates the process of supplementing gaseous refrigerant; during this process, the pressure remains unchanged and the enthalpy value increases. The line from 3' to 4 indicates the operation process of the second-stage compressor; during this process, the pressure of the refrigerant increases and the temperature rises.

The first pressure sensor 11, the first temperature sensor 12, the second pressure sensor 31, the second temperature sensor 32, the third pressure sensor 41, the third temperature sensor 42, the fourth pressure sensor 61, the fourth temperature sensor 62, the fifth pressure sensor 9, and the sixth pressure sensor 13 are all communicatively connected to the calculation module (specifically, in electrical connection). The calculation module can receive pressure parameters measured by the above pressure sensors and temperature parameters measured by the temperature sensors in real time. The first pressure sensor 11, the first temperature sensor 12, the second pressure sensor 31, the second temperature sensor 32, the third pressure sensor 41, the third temperature sensor 42, the fourth pressure sensor 61, the fourth temperature sensor 62, the fifth pressure sensor 9, and the sixth pressure sensor 13 constitute a collection module.

The collection module also collects an input power $W_{comp}$ of the two-stage centrifugal compressor and a total heat exchange amount $Q_{loss}$ of the compressor in real time and sends them to the calculation module. The calculation module can also receive the input power $W_{comp}$ of the two-stage centrifugal compressor and the total heat exchange amount $Q_{loss}$ of the compressor in real time. The input power $W_{comp}$ of the two-stage centrifugal compressor can be obtained by multiplying the current and voltage input to the two-stage centrifugal compressor 2, so that the calculation module can obtain $W_{comp}$ in real time. The total heat exchange amount $Q_{loss}$ of the compressor $= Q_{air.con} + Q_{air.rad} + Q_{ref}$, where $Q_{air.con}$ is the convective heat exchange amount between the two-stage centrifugal compressor and air, $Q_{air.rad}$ is the radiative heat exchange amount between the two-stage centrifugal compressor and air, and $Q_{ref}$ is the heat taken away by the refrigerant.

The calculation module stores a temperature, pressure and enthalpy value comparison table and a saturation pressure and enthalpy value comparison table for various refrigerants. For a specific refrigerant, once its temperature and pressure are determined, its enthalpy value can be uniquely determined from the temperature, pressure and enthalpy value comparison table. The refrigerant can be R134A, R123, R245fa, R1233zd(E), R1336mzz(Z), R1224yd(Z), R514A, R1234ze(E), R513A or R5158B. In this embodiment, R134A is used as the refrigerant. After obtaining the first-stage suction pressure P1 and the first-stage suction temperature T1 through the temperature, pressure and enthalpy value comparison table of R134A, the enthalpy value $h_{0[1]}$ of the first-stage suction port can be determined; after obtaining the second-stage suction pressure P3' and the second-stage suction temperature T3', the enthalpy value $h_{0[3']}$ of the second-stage suction port of the compressor can be determined; after obtaining the second-stage exhaust pressure P4 and the second-stage exhaust temperature T4, the enthalpy value $h_{0[4]}$ of the second-stage discharge port can be determined; after obtaining the gaseous refrigerant supplementing pressure P6 and the gaseous refrigerant supplementing temperature T6, the enthalpy value $h_{0[3]}$ of the gaseous refrigerant supplementing valve can be determined. The enthalpy value $h_{0[5]}$ of the condenser represents the enthalpy value of the refrigerant inside the condenser 5. The condenser pressure P5 is obtained. In some embodiments (where the condenser does not have subcooling degree), the condenser pressure P5 is the saturation pressure of the refrigerant in the condenser. By measuring this saturation pressure through the fifth pressure sensor 9, the enthalpy value $h_{0[5]}$ of the condenser can be determined based on the saturation pressure and enthalpy value comparison table. Alternatively, in some embodiments (where the condenser has subcooling degree), the condenser pressure P5 is the pressure of the refrigerant at the outlet of the condenser. By further measuring the temperature of the refrigerant at the outlet of the condenser, the enthalpy value $h_{0[5]}$ of the condenser is determined based on the temperature, pressure and enthalpy value comparison table. $h_{0[7]}$ represents the enthalpy value at the outlet of the economizer, but it can be concluded from the pressure and enthalpy value chart in FIG. 2 that the enthalpy value does not change from the economizer 7 to the evaporator 8. Therefore, although there is a two-stage throttle valve 14 between the economizer 7 and the evaporator 8, the enthalpy value of pressure reduction of the two-stage throttle valve 14 remains unchanged. The enthalpy value $h_{0[7]}$ at the outlet of the economizer is numerically equal to the enthalpy value of the evaporator. The enthalpy value of the evaporator represents the enthalpy value of the refrigerant inside the evaporator. Therefore, the evaporator pressure P8 can be measured by the sixth pressure sensor 13 to obtain the evaporator pressure P8. In some embodiments, the evaporator pressure P8 is the saturation pressure of the refrigerant inside the evaporator, and the enthalpy value of the evaporator can be determined by referring to the saturation pressure and enthalpy value comparison table. The enthalpy value of the evaporator is used as the enthalpy value $h_{0[7]}$ at the outlet of the economizer for calculation.

The calculation module stores an energy conservation equation established with the two-stage centrifugal compressor 2 as the control body:

$$m_1 h_{0[1]} + \delta m h_{0[3']} + W_{comp} = (m_1 + \delta m) h_{0[4]} + Q_{loss},$$

and
an energy conservation equation established with the economizer 7 as the control body:

$$m_1 h_{0[7]} + \delta m h_{0[3]} = (m_1 + \delta m) h_{0[5]}.$$

From the above two formulas, the actual gaseous refrigerant supplement amount δm can be obtained:

$$\delta m = \frac{m_1\left(h_{0[5]}-h_{0[7]}\right)}{\left(h_{0[3]}-h_{0[5]}\right)},$$

$$m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3']}\right)\left(h_{0[5]}-h_{0[7]}\right)}.$$

in the above formulas:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3']}$: enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

In order to calculate the optimal gaseous refrigerant supplement amount Tδm, the following energy conservation equations are established again: $m_1 h_{0[1]} + \delta m h_{0[3'']} + W_{comp} = (m_1 + \delta m) h_{0[4]} + Q_{loss}$; $m_1 h_{0[7]} + \delta m h_{0[3]} = (m_1 + \delta m) h_{0[5]}$. Unlike the energy conservation equations established for calculating the actual gaseous refrigerant supplement amount, $h_{0[3']}$ is replaced with $h_{0[3'']}$, where $h_{0[3'']}$ is the optimal enthalpy value of the second-stage suction port. The optimal enthalpy value $h_{0[3'']}$ of the second-stage suction port is determined using the target second-stage suction pressure Pmth and the second-stage suction temperature T3' by referring to the temperature, pressure and enthalpy value comparison table stored in the calculation module. The target second-stage suction pressure Pmth=(P5*P8)^0.5, where P5 is the condenser pressure, and P8 is the evaporator pressure.

Using the two energy conservation equations again, the optimal gaseous refrigerant supplement amount Tδm is calculated as follow:

$$T\delta m = \frac{m_1\left(h_{0[5]}-h_{0[7]}\right)}{\left(h_{0[3]}-h_{0[5]}\right)}, \quad m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3'']}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3'']}$: optimal enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

After the optimal gaseous refrigerant supplement amount Tδm and the actual gaseous refrigerant supplement amount δm are calculated by the calculation module, the optimal gaseous refrigerant supplement amount Tδm and the actual gaseous refrigerant supplement amount δm are sent to a control module, and a gaseous refrigerant supplementing valve adjustment instruction is issued. The control module is communicatively connected to the calculation module; specifically, the control module and the calculation module can be electrically connected. The control module receives the optimal gaseous refrigerant supplement amount Tδm and the actual gaseous refrigerant supplement amount δm, with the optimal gaseous refrigerant supplement amount Tδm as the control objective, and the actual gaseous refrigerant supplement amount δm as the feedback value, so as to adjust the opening degree of the gaseous refrigerant supplementing valve 6. If the optimal gaseous refrigerant supplement amount Tδm is larger than the actual gaseous refrigerant supplement amount δm, then the opening degree of the gaseous refrigerant supplementing valve 6 is increased. If the optimal gaseous refrigerant supplement amount Tδm is equal to the actual gaseous refrigerant supplement amount δm, then the opening degree of the gaseous refrigerant supplementing valve 6 remains unchanged. If the optimal gaseous refrigerant supplement amount Tδm is smaller than the actual gaseous refrigerant supplement amount δm, then the opening degree of the gaseous refrigerant supplementing valve 6 is reduced.

The control module also determines the amplitude of adjusting the opening degree of the gaseous refrigerant supplementing valve 6 based on a difference between the optimal gaseous refrigerant supplement amount Tδm and the actual gaseous refrigerant supplement amount δm. After adjustment, the opening degree of the gaseous refrigerant supplementing valve 6 is a first opening degree. Through the calculation module, the actual gaseous refrigerant supplement amount δm of the gaseous refrigerant supplementing valve 6 approaches the optimal gaseous refrigerant supplement amount Tδm in real time. Therefore, the actual gaseous refrigerant supplement amount δm can fall within the optimal range of gaseous refrigerant supplement amount, resulting in a better refrigerant supplementing effect.

After the opening degree of the gaseous refrigerant supplementing valve 6 is adjusted to the first opening degree, the control module further obtains a second-stage suction superheat degree Tsh3' at the second-stage suction port or a second-stage discharge superheat degree Tsh4 at the second-stage discharge port, and judges whether the second-stage suction superheat degree Tsh3' is within a preset range, or whether the second-stage discharge superheat degree Tsh4 is within a preset range. If the second-stage suction superheat degree Tsh3' is within the preset range or the second-stage discharge superheat degree Tsh4 is also within the preset range, then the gaseous refrigerant supplementing valve 6 maintains the first opening degree unchanged.

The method for calculating the second-stage suction superheat degree Tsh3' is: obtaining the second-stage suction pressure P3' and the second-stage suction temperature T3'; and obtaining the saturation temperature TP3' corresponding to the second-stage suction pressure P3' through the second-stage suction pressure P3'. The second-stage suction superheat degree Tsh3'=T3'-TP3'. The method for calculating the second-stage discharge superheat degree Tsh4 is: obtaining the second-stage exhaust pressure P4 and the second-stage exhaust temperature T4; and obtaining the saturation temperature Tp4 corresponding to the second-stage exhaust pressure P4 through the second-stage exhaust pressure P4. The second-stage discharge superheat degree Tsh4=T4-Tp4.

Further, if the second-stage suction superheat degree Tsh3' is smaller than a preset lower limit of suction superheat degree, or the second-stage discharge superheat degree Tsh4 is smaller than a preset lower limit of discharge superheat degree, then the control module will perform opening degree reduction control on the gaseous refrigerant supplementing valve 6. If the second-stage suction superheat degree Tsh3' is larger than a preset upper limit of suction superheat degree, or the second-stage discharge superheat degree Tsh4 is larger than a preset upper limit of discharge superheat degree, then the control module will perform energy adjustment control on the gaseous refrigerant supplementing valve 6.

In some embodiments of the present disclosure, when the control module performs energy adjustment control on the gaseous refrigerant supplementing valve 6, the control module obtains the second-stage suction pressure P3' and judges whether the second-stage suction pressure P3' has reached the current target second-stage suction pressure value Pmth. If the second-stage suction pressure P3' has not reached the current target suction pressure value Pmth, the control module increases/reduces the opening degree of the gaseous refrigerant supplementing valve 6 so that the second-stage suction pressure P3' reaches the current target suction pressure value Pmth.

After the opening degree of the gaseous refrigerant supplementing valve 6 was adjusted to the first opening degree, the actual gaseous refrigerant supplement amount δm was adjusted for the second time to avoid the risk of carrying liquid during refrigerant supplementing, achieving safe and reliable operation of the two-stage compression centrifugal unit 100.

The two-stage compression centrifugal unit 100 provided in the present disclosure has the following advantageous effects.

Firstly, multiple temperature sensors and multiple pressure sensors can be used to measure the first-stage suction pressure P1, the first-stage suction temperature T1, the second-stage suction pressure P3', the second-stage suction temperature T3', the gaseous refrigerant supplementing pressure P6, the gaseous refrigerant supplementing temperature T6, the second-stage exhaust pressure P4, the second-stage exhaust temperature T4, the condenser pressure P5, and the evaporator pressure P8 in real time. The calculation module receives these temperature parameters and pressure parameters; then, in combination with the input power $W_{comp}$ of the two-stage centrifugal compressor and the total heat exchange amount $Q_{loss}$ of the compressor, the calculation module of the two-stage compression centrifugal unit 100 inputs the above operating parameters into the internally stored energy conservation equation established with the two-stage centrifugal compressor 2 as the control body and the internally stored energy conservation equation established with the economizer 7 as the control body, so that the optimal gaseous refrigerant supplement amount Tδm and the actual gaseous refrigerant supplement amount δm can be calculated to adjust the opening degree of the gaseous refrigerant supplementing valve 6. If the actual gaseous refrigerant supplement amount δm is different from the optimal gaseous refrigerant supplement amount Tδm, the module will send a gaseous refrigerant supplementing valve adjustment instruction. The control module receives the optimal gaseous refrigerant supplement amount Tδm and the actual gaseous refrigerant supplement amount δm, and uses the optimal gaseous refrigerant supplement amount Tδm as the control objective and the actual gaseous refrigerant supplement amount δm as the feedback value to adjust the opening degree of the gaseous refrigerant supplementing valve 6, so that the actual gaseous refrigerant supplement amount δm can be adjusted in real time to approach the optimal gaseous refrigerant supplement amount Tδm. The adjusted actual gaseous refrigerant supplement amount δm is within the optimal range of gaseous refrigerant supplement amount.

Secondly, by providing the pressure sensors and temperature sensors, as well as adding the calculation module, the actual gaseous refrigerant supplement amount δm and the optimal gaseous refrigerant supplement amount Tδm can be calculated, achieving low-cost and accurate detection of the two-stage compression centrifugal unit 100. The detection accuracy is high, enabling precise control of the actual gaseous refrigerant supplement amount δm of the two-stage compression centrifugal unit 100. The actual gaseous refrigerant supplement amount δm of the gaseous refrigerant supplementing valve 6 is within the optimal range of gaseous refrigerant supplement amount. The gaseous refrigerant supplement amount can be dynamically adjusted online adaptively with changes in the load and operating conditions without increasing the structural complexity of the two-stage compression centrifugal unit 100, making full use of the advantages of the two-stage centrifugal compressor 2 in supplementing refrigerant and increasing enthalpy.

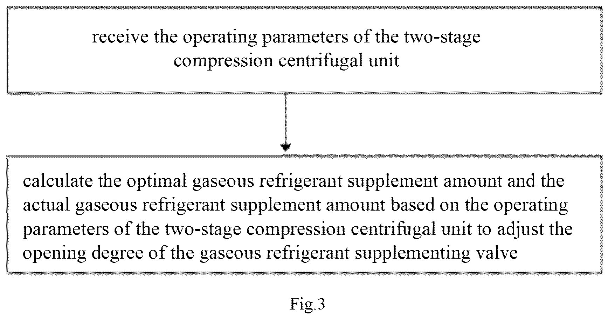

FIG. 3 shows a flowchart of the intermediate gaseous refrigerant supplementing control method for a two-stage compression centrifugal unit 100 according to some embodiments of the present disclosure. Referring to FIG. 3, some embodiments of the second aspect of the present disclosure provide an intermediate gaseous refrigerant supplementing control method for a two-stage compression centrifugal unit, which is implemented by the two-stage compression centrifugal unit 100 according to the first aspect of the present disclosure, and which comprises the following steps:

receiving the operating parameters of the two-stage compression centrifugal unit 100; and

calculating the actual gaseous refrigerant supplement amount δm and the optimal gaseous refrigerant supplement amount Tδm based on the operating parameters of the two-stage compression centrifugal unit 100 to adjust the opening degree of the gaseous refrigerant supplementing valve 6.

The operating parameters of the two-stage compression centrifugal unit 100 comprise the first-stage suction pressure P1, the first-stage suction temperature T1, the second-stage suction pressure P3', the second-stage suction temperature T3', the second-stage exhaust pressure P4, the second-stage exhaust temperature T4, the gaseous refrigerant supplementing pressure P6, the gaseous refrigerant supplementing temperature T6, the condenser pressure P5, and the evaporator pressure P8. Based on the above temperature parameters and pressure parameters, as well as the temperature, pressure and enthalpy value comparison table and/or the pressure and saturation enthalpy value comparison table, $h_{0[1]}$, $h_{0[3]}$, $h_{0[3']}$, $h_{0[4]}$, $h_{0[5]}$ and $h_{0[7]}$ are determined. In combination with the input power $W_{comp}$ of the two-stage centrifugal compressor and the total heat exchange amount $Q_{loss}$ of the compressor, the actual gaseous refrigerant supplement amount δm is calculated through the following formulas:

$$\delta m = \frac{m_1\left(h_{0[5]}-h_{0[7]}\right)}{\left(h_{0[3]}-h_{0[5]}\right)}, \quad m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3']}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3']}$: enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

The method for calculating the optimal gaseous refrigerant supplement amount based on the operating parameters of the two-stage compression centrifugal unit 100 comprises:

determining $h_{0[1]}$, $h_{0[3]}$, $h_{0[3'']}$, $h_{0[4]}$, $h_{0[5]}$ and $h_{0[7]}$ based on the first-stage suction pressure P1, the first-stage suction temperature T1, the target second-stage suction pressure Pmth, the second-stage suction temperature T3', the second-stage exhaust pressure P4, the second-stage exhaust temperature T4, the gaseous refrigerant supplementing pressure P6, the gaseous refrigerant supplementing temperature T6, the condenser pressure P5, and the evaporator pressure P8, as well as the temperature, pressure and enthalpy value comparison table and/or the pressure and saturation enthalpy value comparison table. In combination with the input power $W_{comp}$ of the two-stage centrifugal compressor and the total heat exchange amount $Q_{loss}$ of the compressor, the optimal gaseous refrigerant supplement amount Tδm is calculated through the following formulas:

$$\mathrm{T\delta m} = \frac{m_1\left(h_{0[5]}-h_{0[7]}\right)}{\left(h_{0[3]}-h_{0[5]}\right)}, \quad m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3'']}\right)\left(h_{0[5]}-h_{0[7]}\right)};$$

where:

$m_1$: mass of refrigerant in the first-stage cyclic compression of the two-stage centrifugal compressor;

$W_{comp}$: input power of the two-stage centrifugal compressor;

$Q_{loss}$: total heat exchange amount of the two-stage centrifugal compressor;

$h_{0[1]}$: enthalpy value of the first-stage suction port;

$h_{0[3]}$: enthalpy value of the gaseous refrigerant supplementing valve;

$h_{0[3'']}$: optimal enthalpy value of the second-stage suction port;

$h_{0[4]}$: enthalpy value of the second-stage discharge port;

$h_{0[5]}$: enthalpy value of the condenser; and

$h_{0[7]}$: enthalpy value at the outlet of the economizer.

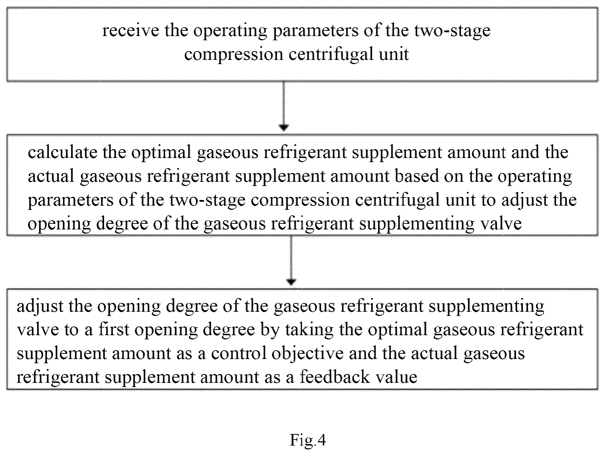

FIG. 4 shows a flowchart of the intermediate gaseous refrigerant supplementing control method for a two-stage compression centrifugal unit according to some embodiments of the present disclosure. Referring to FIG. 4, after "calculating the actual gaseous refrigerant supplement amount δm and the optimal gaseous refrigerant supplement amount Tδm based on the operating parameters of the two-stage compression centrifugal unit 100 to adjust the opening degree of the gaseous refrigerant supplementing valve 6", the method further comprises a step of "adjusting the opening degree of the gaseous refrigerant supplementing valve to a first opening degree by taking the optimal gaseous refrigerant supplement amount as a control objective and the actual gaseous refrigerant supplement amount as a feedback value".

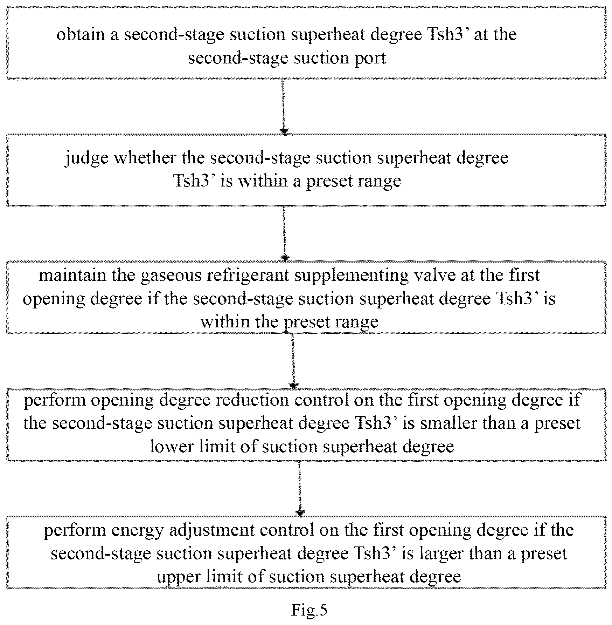

FIG. 5 shows a flowchart of the intermediate gaseous refrigerant supplementing control method for a two-stage compression centrifugal unit according to some embodiments of the present disclosure. Referring to FIG. 5, after "adjusting the opening degree of the gaseous refrigerant supplementing valve 6 to a first opening degree by taking the optimal gaseous refrigerant supplement amount as a control objective and the actual gaseous refrigerant supplement amount as a feedback value", the method further comprises the following steps:

obtaining a second-stage suction superheat degree Tsh3' at the second-stage suction port;

judging whether the second-stage suction superheat degree Tsh3' is within a preset range;

maintaining the gaseous refrigerant supplementing valve 6 at the first opening degree if the second-stage suction superheat degree Tsh3' is within the preset range;

performing opening degree reduction control on the first opening degree if the second-stage suction superheat degree Tsh3' is smaller than a preset lower limit of suction superheat degree; and

performing energy adjustment control on the first opening degree if the second-stage suction superheat degree Tsh3' is larger than a preset upper limit of suction superheat degree.

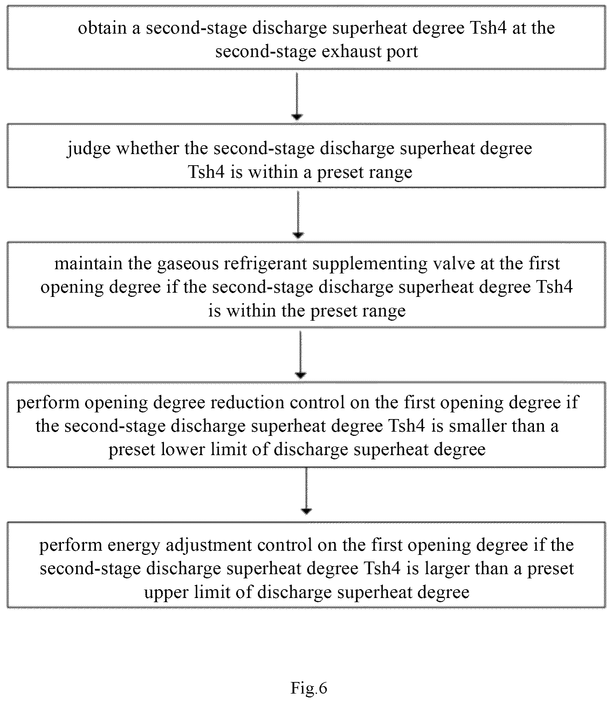

Referring to FIG. 6, alternatively, after "adjusting the opening degree of the gaseous refrigerant supplementing valve 6 to a first opening degree by taking the optimal gaseous refrigerant supplement amount as a control objective and the actual gaseous refrigerant supplement amount as a feedback value", the method may further comprise the following steps:

obtaining a second-stage discharge superheat degree Tsh4 at the second-stage discharge port;

judging whether the second-stage discharge superheat degree Tsh4 is within a preset range;

maintaining the gaseous refrigerant supplementing valve 6 at the first opening degree if the second-stage discharge superheat degree Tsh4 is within the preset range;

performing opening degree reduction control on the first opening degree if the second-stage discharge superheat degree Tsh4 is smaller than a preset lower limit of discharge superheat degree; and

performing energy adjustment control on the first opening degree if the second-stage discharge superheat degree Tsh4 is larger than a preset upper limit of discharge superheat degree.

The method for calculating the second-stage suction superheat degree Tsh3' is: obtaining the second-stage suction pressure P3' and the second-stage suction temperature T3'; and obtaining the saturation temperature TP3' corresponding to the second-stage suction pressure P3' through the second-stage suction pressure P3'. The second-stage suction superheat degree Tsh3'=T3'-TP3'. The method for calculating the second-stage discharge superheat degree Tsh4 is: obtaining the second-stage exhaust pressure P4 and the second-stage exhaust temperature T4; and obtaining the saturation temperature Tp4 corresponding to the second-stage exhaust pressure P4 through the second-stage exhaust pressure P4. The second-stage discharge superheat degree Tsh4=T4-Tp4.

In some embodiments of the present disclosure, when the control module performs energy adjustment control on the gaseous refrigerant supplementing valve 6, the control module obtains the second-stage suction pressure P3' at the second-stage suction port and judges whether the second-stage suction pressure P3' has reached the current target second-stage suction pressure value Pmth. If the second-stage suction pressure P3' has not reached the current target suction pressure value Pmth, the control module increases/reduces the opening degree of the gaseous refrigerant supplementing valve 6 so that the second-stage suction pressure P3' reaches the current target suction pressure value Pmth.

After the gaseous refrigerant supplementing valve 6 is adjusted to the first opening degree, the second-stage suction superheat degree Tsh3' and the second-stage discharge superheat degree Tsh4 are compared with preset ranges, and the gaseous refrigerant supplementing valve 6 is adjusted again based on the comparison results to avoid the situation of carrying liquid during gaseous refrigerant supplementing.

Some embodiments of the second aspect of the present disclosure provide an HVAC apparatus, which comprises the two-stage compression centrifugal unit.

Optional embodiments of the present disclosure are described above in detail in connection with the accompanying drawings. However, the embodiments of the present disclosure are not limited to the specific details of the above embodiments. Within the scope of the technical concept of the embodiments of the present disclosure, various simple modifications can be made to the technical solutions of the embodiments of the present disclosure, all of which will fall within the scope of protection of the embodiments of the present disclosure.

In addition, it should be noted that the various specific technical features described in the above embodiments can be combined in any suitable way without contradiction. In order to avoid unnecessary repetition, various possible combinations will not be separately explained in the embodiments of the present disclosure.

Described above are only some specific embodiments of the present disclosure, but the scope of protection of the present disclosure is not limited to this. Any changes or replacements that can be easily conceived by those skilled in the art within the technical scope disclosed by the present disclosure should be covered within the scope of protection of the present disclosure. Therefore, the scope of protection of the present disclosure should be accorded with the scope of protection of the claims.

**Claims**

1. A two-stage compression centrifugal unit, comprising:

   a two-stage centrifugal compressor;
   an evaporator and a condenser, wherein a first-stage suction port of the two-stage centrifugal compressor is connected to an outlet of the evaporator, and a second-stage discharge port of the two-stage centrifugal compressor is connected to an inlet of the condenser;
   an economizer and a gaseous refrigerant supplementing valve, wherein the economizer is connected between an inlet of the evaporator and an outlet of the condenser, and the economizer is connected to a first-stage discharge port and a second-stage suction port of the two-stage centrifugal compressor respectively through the gaseous refrigerant supplementing valve; and

a calculation module, wherein the calculation module calculates an actual gaseous refrigerant supplement amount and an optimal gaseous refrigerant supplement amount based on operating parameters of the two-stage compression centrifugal unit, so that an opening degree of the gaseous refrigerant supplementing valve can be adjusted.

2. The two-stage compression centrifugal unit according to claim 1, wherein the calculation module calculates the actual gaseous refrigerant supplement amount $\delta m$ based on following formulas:

$$\delta m = \frac{m_1\left(h_{0[5]}-h_{0[7]}\right)}{\left(h_{0[3]}-h_{0[5]}\right)}, \; m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3']}\right)\left(h_{0[5]}-h_{0[7]}\right)};$$

where:

$m_1$: mass of refrigerant in a first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3']}$: enthalpy value of the second-stage suction port;
$h_{0[4]}$: enthalpy value of the second-stage discharge port;
$h_{0[5]}$: enthalpy value of the condenser; and
$h_{0[7]}$: enthalpy value at an outlet of the economizer.

3. The two-stage compression centrifugal unit according to claim 1, wherein the calculation module calculates the optimal gaseous refrigerant supplement amount $T\delta m$ based on following formulas:

$$T\delta m = \frac{m_1\left(h_{0[5]}-h_{0[7]}\right)}{\left(h_{0[3]}-h_{0[5]}\right)}, \; m_1 = \frac{\left(W_{comp}-Q_{loss}\right)\left(h_{0[3]}-h_{0[5]}\right)}{\left(h_{0[4]}-h_{0[1]}\right)\left(h_{0[3]}-h_{0[5]}\right)+\left(h_{0[4]}-h_{0[3'']}\right)\left(h_{0[5]}-h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3'']}$: optimal enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

4. The two-stage compression centrifugal unit according to claim 2 or 3, wherein the operating parameters comprise temperature parameters and pressure parameters, and the calculation module is capable of obtaining $h_{0[1]}$, $h_{0[3]}$, $h_{0[3']}$, $h_{0[3'']}$, $h_{0[4]}$, $h_{0[5]}$ and $h_{0[7]}$ based on the temperature parameters and pressure parameters by referring to a temperature, pressure and enthalpy value comparison table and/or a pressure and saturation enthalpy value comparison table.

5. The two-stage compression centrifugal unit according to claim 1, further comprising a control module, wherein the control module adjusts the opening degree of the gaseous refrigerant supplementing valve by taking the optimal gaseous refrigerant supplement amount as a control objective and the actual gaseous refrigerant supplement amount as a feedback value.

6. An intermediate gaseous refrigerant supplementing control method for a two-stage compression centrifugal unit, which is implemented by the two-stage compression centrifugal unit according to any one of claims 1 to 5, and which comprises following steps:

receiving operating parameters of the two-stage compression centrifugal unit; and
calculating an optimal gaseous refrigerant supplement amount and an actual gaseous refrigerant supplement amount based on the operating parameters of the two-stage compression centrifugal unit to adjust an opening degree of a gaseous refrigerant supplementing valve.

7. The intermediate gaseous refrigerant supplementing control method for the two-stage compression centrifugal unit according to claim 6, wherein the actual gaseous refrigerant supplement amount $\delta m$ is calculated based on following formulas:

$$\delta m = \frac{m_1\left(h_{0[5]} - h_{0[7]}\right)}{\left(h_{0[3]} - h_{0[5]}\right)}, \ m_1 = \frac{\left(W_{comp} - Q_{loss}\right)\left(h_{0[3]} - h_{0[5]}\right)}{\left(h_{0[4]} - h_{0[1]}\right)\left(h_{0[3]} - h_{0[5]}\right) + \left(h_{0[4]} - h_{0[3\prime]}\right)\left(h_{0[5]} - h_{0[7]}\right)};$$

where:

$m_1$: mass of refrigerant in a first-stage cyclic compression of a two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of a first-stage suction port;
$h_{0[3]}$: enthalpy value of the gaseous refrigerant supplementing valve;
$h_{0[3\prime]}$: enthalpy value of a second-stage suction port;
$h_{0[4]}$: enthalpy value of a second-stage discharge port;
$h_{0[5]}$: enthalpy value of a condenser; and
$h_{0[7]}$: enthalpy value at an outlet of an economizer.

8. The intermediate gaseous refrigerant supplementing control method for the two-stage compression centrifugal unit according to claim 6, wherein the optimal gaseous refrigerant supplement amount $T\delta m$ is calculated based on following formulas:

$$T\delta m = \frac{m_1\left(h_{0[5]} - h_{0[7]}\right)}{\left(h_{0[3]} - h_{0[5]}\right)}, \ m_1 = \frac{\left(W_{comp} - Q_{loss}\right)\left(h_{0[3]} - h_{0[5]}\right)}{\left(h_{0[4]} - h_{0[1]}\right)\left(h_{0[3]} - h_{0[5]}\right) + \left(h_{0[4]} - h_{0[3\prime\prime]}\right)\left(h_{0[5]} - h_{0[7]}\right)};$$

where:

$m_1$: mass of refrigerant in the first-stage cyclic compression of the two-stage centrifugal compressor;
$W_{comp}$: input power of the two-stage centrifugal compressor;
$Q_{loss}$: total heat exchange amount of the two-stage centrifugal compressor;
$h_{0[1]}$: enthalpy value of the first-stage suction port;
$h_{0[3]}$: enthalpy value of the gaseous refrigerant supplementing valve;
$h_{0[3\prime\prime]}$: optimal enthalpy value of the second-stage suction port;
$h_{0[4]}$: enthalpy value of the second-stage discharge port;
$h_{0[5]}$: enthalpy value of the condenser; and
$h_{0[7]}$: enthalpy value at the outlet of the economizer.

9. The intermediate gaseous refrigerant supplementing control method for the two-stage compression centrifugal unit according to claim 6, further comprising a following step:
adjusting the opening degree of the gaseous refrigerant supplementing valve to a first opening degree by taking the optimal gaseous refrigerant supplement amount as a control objective and the actual gaseous refrigerant supplement amount as a feedback value.

10. The intermediate gaseous refrigerant supplementing control method for the two-stage compression centrifugal unit according to claim 9, further comprising following steps:

obtaining a second-stage suction superheat degree at the second-stage suction port;
judging whether the second-stage suction superheat degree is within a preset range;
maintaining the gaseous refrigerant supplementing valve at the first opening degree if the second-stage suction superheat degree is within the preset range;

performing opening degree reduction control on the first opening degree if the second-stage suction superheat degree is smaller than a preset lower limit of suction superheat degree; and

performing energy adjustment control on the first opening degree if the second-stage suction superheat degree is larger than a preset upper limit of suction superheat degree.

11. The intermediate gaseous refrigerant supplementing control method for the two-stage compression centrifugal unit according to claim 9, further comprising following steps:

obtaining a second-stage discharge superheat degree at the second-stage discharge port;

judging whether the second-stage discharge superheat degree is within a preset range;

maintaining the gaseous refrigerant supplementing valve at the first opening degree if the second-stage discharge superheat degree is within the preset range;

performing opening degree reduction control on the first opening degree if the second-stage discharge superheat degree is smaller than a preset lower limit of discharge superheat degree; and

performing energy adjustment control on the first opening degree if the second-stage discharge superheat degree is larger than a preset upper limit of discharge superheat degree.

12. A heating, ventilation and air conditioning apparatus, comprising a two-stage compression centrifugal unit according to any one of claims 1 to 5.

Fig.1

Fig.2

receive the operating parameters of the two-stage
compression centrifugal unit

calculate the optimal gaseous refrigerant supplement amount and the
actual gaseous refrigerant supplement amount based on the operating
parameters of the two-stage compression centrifugal unit to adjust the
opening degree of the gaseous refrigerant supplementing valve

Fig.3

receive the operating parameters of the two-stage
compression centrifugal unit

calculate the optimal gaseous refrigerant supplement amount and the
actual gaseous refrigerant supplement amount based on the operating
parameters of the two-stage compression centrifugal unit to adjust the
opening degree of the gaseous refrigerant supplementing valve

adjust the opening degree of the gaseous refrigerant supplementing
valve to a first opening degree by taking the optimal gaseous refrigerant
supplement amount as a control objective and the actual gaseous
refrigerant supplement amount as a feedback value

Fig.4

obtain a second-stage suction superheat degree Tsh3' at the
second-stage suction port

judge whether the second-stage suction superheat degree
Tsh3' is within a preset range

maintain the gaseous refrigerant supplementing valve at the first
opening degree if the second-stage suction superheat degree Tsh3' is
within the preset range

perform opening degree reduction control on the first opening degree if
the second-stage suction superheat degree Tsh3' is smaller than a preset
lower limit of suction superheat degree

perform energy adjustment control on the first opening degree if the
second-stage suction superheat degree Tsh3' is larger than a preset
upper limit of suction superheat degree

Fig.5

obtain a second-stage discharge superheat degree Tsh4 at the second-stage exhaust port

judge whether the second-stage discharge superheat degree Tsh4 is within a preset range

maintain the gaseous refrigerant supplementing valve at the first opening degree if the second-stage discharge superheat degree Tsh4 is within the preset range

perform opening degree reduction control on the first opening degree if the second-stage discharge superheat degree Tsh4 is smaller than a preset lower limit of discharge superheat degree

perform energy adjustment control on the first opening degree if the second-stage discharge superheat degree Tsh4 is larger than a preset upper limit of discharge superheat degree

Fig.6

## INTERNATIONAL SEARCH REPORT

| International application No. |
|---|
| **PCT/CN2023/135901** |

| A. | CLASSIFICATION OF SUBJECT MATTER |
|---|---|

F25B49/02(2006.01)i; F25B41/20(2021.01)i

According to International Patent Classification (IPC) or to both national classification and IPC

| B. | FIELDS SEARCHED |
|---|---|

Minimum documentation searched (classification system followed by classification symbols)

IPC: F25B,F24F

Documentation searched other than minimum documentation to the extent that such documents are included in the fields searched

Electronic data base consulted during the international search (name of data base and, where practicable, search terms used)

CNTXT, CNABS, CNKI, VEN, ENTXTC: 双极, 离心, 压缩机, 经济器, 补气阀, 参数, 负荷, 功率, 开度, 调节, 焓值, 阈值, 范围, bipolar, centrifugal, compressor, economizer, valve, parameters, load, power, opening, adjustment, enthalpy, threshold, range

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116447765 A (CHONGQING MIDEA GENERAL REFRIGERATING EQUIPMENT CO., LTD. et al.) 18 July 2023 (2023-07-18) description, paragraphs [0007]-[0182], and figures 1-6 | 1-12 |
| X | CN 114198868 A (QINGDAO TENGYUAN DESIGN INSTITUTE CO., LTD.) 18 March 2022 (2022-03-18) description, paragraphs [0022]-[0055], and figures 1-3 | 1, 5-6, 9-12 |
| X | CN 108759211 A (CHONGQING MIDEA GENERAL REFRIGERATING EQUIPMENT CO., LTD. et al.) 06 November 2018 (2018-11-06) description, paragraphs [0033]-[0074], and figures 1-6 | 1, 5-6, 9-12 |
| X | CN 217109936 U (QINGDAO TENGYUAN DESIGN INSTITUTE CO., LTD.) 02 August 2022 (2022-08-02) description, paragraphs [0015]-[0035], and figures 1-2 | 1, 5-6, 9-12 |
| A | CN 112944707 A (GREE ELECTRIC APPLIANCES, INC. OF ZHUHAI) 11 June 2021 (2021-06-11) entire document | 1-12 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2024** | **02 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135901**

| C. | DOCUMENTS CONSIDERED TO BE RELEVANT | |
|---|---|---|
| Category* | Citation of document, with indication, where appropriate, of the relevant passages | Relevant to claim No. |
| A | EP 3712541 A1 (QINGDAO HAIER AIR-CONDITIONING ELECTRONIC CO., LTD.) 23 September 2020 (2020-09-23)<br>entire document | 1-12 |

Form PCT/ISA/210 (second sheet) (July 2022)

## INTERNATIONAL SEARCH REPORT
### Information on patent family members

| International application No. |
|---|
| **PCT/CN2023/135901** |

| Patent document cited in search report | | | Publication date (day/month/year) | Patent family member(s) | | | Publication date (day/month/year) |
|---|---|---|---|---|---|---|---|
| CN | 116447765 | A | 18 July 2023 | None | | | |
| CN | 114198868 | A | 18 March 2022 | None | | | |
| CN | 108759211 | A | 06 November 2018 | None | | | |
| CN | 217109936 | U | 02 August 2022 | None | | | |
| CN | 112944707 | A | 11 June 2021 | None | | | |
| EP | 3712541 | A1 | 23 September 2020 | ES | 2932365 | T3 | 18 January 2023 |
| | | | | EP | 3712541 | A4 | 06 January 2021 |
| | | | | EP | 3712541 | B1 | 09 November 2022 |
| | | | | WO | 2020103271 | A1 | 28 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310239288